# EUROPEAN PATENT APPLICATION

(11) **EP 0 773 396 A1**
(43) Date of publication of application: **14.05.1997**
(21) Application number: 96500091.2
(22) Date of filing: 02.07.1996
(51) Int. Cl.: F16L 3/12, F16L 3/04

(54) **Improvements in clamps, for the attachment of tubings and other uses**

(30) Priority: 08.11.1995 AR 33415495
(71) Applicant: Nagel, Victorio Alberto, Buenos Aires (AG)
(72) Inventor: Nagel, Victorio Alberto, Buenos Aires (AG)
(74) Representative: Garcia Cabrerizo, Francisco

(57) **Abstract**

IMPROVEMENTS IN CLAMPS (a) FOR THE FIXING OF TUBINGS AND OTHER USES; of the type comprehending a single piece wherein, on one hand, it conforms a clamping arc (6,6') -destined to encircle the tubing being applied- and on the other hand, in at least one ot its extremes, it ends conforming a base for the fixing of the clamp to a wall or similar, characterized by being structured on a wire that, folded on itself at approximately half of its complete length, as from a first folding (1) of the end -resulting from said folding- defines two spans of the same wire, separated from each other by a path (2) that extends all along the length of the single piece and ends with their extremes (13,13'), both oriented in a common direction; this dual wire, conforms at least a first anchoring base (3,3'), delimited by the mentioned first extreme folding (1) and a second intermediate and dual folding (4,4') where the clamping arc (6,6') begins, being also dual; while, said clamping arc (6,6') is delimited by a third dual folding (8,8') that ends in the mentioned extremes (13,13') of the wire.

## Description

### I - BACKGROUND OF THE INVENTION

The present invention refers to improvements in clamps, for the attachment of tubings and other uses; which has as an aim to provide support and mounting means for tubings, wires, bars and similar objects in a simple and efficient way which constitutes a positive contribution to technology.

### State of the art:

In compliance with formal requirements, and, also to mark in a clearer way the difference of the invention in comparison with the state of the art, it must be noted that the non elastic clamps made of metal sheets (generally as the ones structured in galvanized SAE 1010 or similar) are already known and, being in existence in the market long since, they constitute the commonest way to fix a tubing against a wall, as well as joining intercrossed tubings; supporting electric conductors and, generally, mounting such elements with an elongated shape onto a firm structure.

These conventional clamps essentially consist of a metal strip or band, with a longitudinal section with an Ω (omega) shape and consisting of a semi-circular arc - that constitutes the clamp proper- delimited by two transversal lines of the folding, the iron strip clamp being completed with perforated spans that constitute the base of the anchoring of the clamp to the wall, and that begin as from the mentioned foldings.

When using the above mentioned iron strip clamp, the most classic of all, the tubing is wedged in the cavity of the arc, while the base of the anchoring leans against the wall or the supporting structure; the set being fixed by means of screws or a similar object, which are passed through the perforations of the mentioned perforated spans. This is the case of the "closed" clamps, such designation due to the fact that, once both anchoring screws are inserted, the mounting or supporting element or the tubing remains tight between said clamp and the wall; with which, to remove it or to mount it again, it is necessary to loosen and remove the screws so as to free the complete set.

The "open" clamps are equally known. They present a perforated base of the anchoring, while the arc of support is incomplete and extends in the shape of a hook, with which it is possible to dismount the tubing forcing it to pass through said opening of the arc without the need of dismounting the clamp.

In any of both versions, open or closed, this type of clamps have several disadvantages:

Firstly, their structure, being non elastic, demands the manufacturing of so many different clamp sizes as variety of diameters of tubing exist in the market; which complicates the production and stock in an outstanding way, with the result, in general, that if the tubing has a diameter larger than the interior of the clamp, the forced entry is achieved by means of a deformation of said clamp, which remains open and with the bases of the anchoring uneven and with the rod of the screws partially at sight (that is, without being screwed), rendering an insecurity in the mounting and an antiaesthetic aspect, and also difficulties derived from the normal expansion and contraction of the tubing. If, otherwise, the internal diameter of the clamp is larger than the interior of the tubing (which generally occurs), a tight attachment is not achieved and the tubing remains slack, that is, able to move (situation that is quite common).

Secondly, as it has been mentioned, the anchoring is produced by means of screws or similar objects that must go through the respective perforations at the ends of the conventional clamp, it is not possible to modify the placing of each screw given that such placing depends on the position of the perforations. Due to this, in case there is a need to alter the position of one of the screws (for example, when the wall cannot be perforated at that spot, or is too weak to be perforated), the operator is obliged to remove the clamp and repeat the perforation in a new position so as to repeat all the mounting process.

In the third place, as in the case of the clamps of the "open" type, although it is true that, in general, it is possible to dismount the tubing without removing said clamp from its wall anchoring, the lack of elasticity from the latter implies that the forced passage of the tubing shall deform it permanently, up to the point of rendering it useless.

In the fourth place, its nature generally obliges its being discarded any time the tubings must be removed.

On the other hand, the mounting of tubings and wires on candlestick-type holders are known too, which are no other than open couplings anchored to the wall or the fixed structure, but they do not constitute a supporting clamp but, simply, a bearing for the tubings or other elements (such as it occurs with the electric wires that are usually seen along the way of the electric trains and subways). An example of a crossing candlestick is given by means of patent Nº 193.899, in which the members constituting the same are only used to hold one of the tubings and to pass to the other one (bearing in mind that the fixing occurs in the crossing of both tubings).

In a similar way, the clamps that may be opened are known, as the ones of patents Nº 247.282 and 241.820; they consist of a pair of hinged jaws (one of them being able to be their own articulation base), but being of a very limited resistance, without allowing its use in the anchoring of a wall as it was indicated, but useful for other purposes.

The annular clamps are also known -as the one of patent Nº 202.602- which are of a constricting type and form complete rings with pulling means of the component elements so as to vary the diameter, but these are only useful to fix the applying pieces in a constrictive way (for example, a rubber hose coupled with a rigid tubing), so as to avoid the dripping of fluids, for example, but it does not allow wall mounting nor the supporting of the tubing to a fixed structure.

The metal sheet clamps, with a fixed anchoring to the wall, which are also known, consist in a rigid anchoring member or end or wall fixing -either to introduce it in a wall or to support its end by means of screws- and finished on the opposite end with a span in the shape of a cross that conforms one of the jaws of the clamp and, by means of an embedding, mountable to the other dismountable jaw; such as it is shown in the Argentine patent Nº 93.263. However, this embodiment, as well as being developed for predetermined diameters -with the already discussed disadvantages- in the rest of the metal sheet clamps, has the disadvantage of presenting loose pieces (as the one of the jaw), and giving a quite limited clamp shutting, as, due to its nature, it does not allow an excessive fixing.

Finally, means such as "pigtail", are also known, which consist in a wire or rod that may be anchored to the wall, and ends forming a closed ringlet -through which a wire is generally inserted-, but they do not constitute a clamp, rather, they are simply a guiding eyelet of the wire. Within the scope of that same concept, the wooden peg of patent Nº 232.510 may be found.

### The proposed invention

The object of the present invention consists in a new wire clamp that may be produced in large quantities and with a quite reduced price in automatic wire shaping machines; with the particularity that its elastic feature allows a fixed clamping, and at the same time can be adapted to different tubing diameters.

On the other hand, its wire structure, being dual supplies an adequate support and, due to its elastic nature, varies together with the expansion and contraction of the tubing; with the particularity that a path is conformed among the branching of the wire pertaining to the dual structure, said path, forms an elongated eyelet in the area of each base of anchoring which allows the fixing of the screws in different positions or spots within each track, that is, without being limited to the predetermined positions as the classic perforations of the conventional clamps.

Due to all the above mentioned, the acceptance that said clamp may have when being put into practice may be imagined, in any category or use given, because the characteristics defining it allow it to be used either as a support and mounting for tubings, wires and similar objects to a fixing structure such as a wall, a frame, etc.

### II - DRAWINGS

For better clarity and comprehension of the object of the invention, the same is illustrated with several drawings in which it has been represented in one of the preferred embodiments, as a not limiting and illustrative example:

Figure 1 is a view in perspective of the wire clamp, allowing to note its dual constitution and formed by one single piece of folded wire.

Figure 2 is a front elevated view of the clamp, showing its configuration similar to a Greek letter Ω (omega).

Figure 3 is a top view of the clamp -in relation with the view of Figure 2- where the continuity of the path formed by the spacing of both spans of the wire as from its intermediate starting folding and the track formed in each base that allows the fixing of the screws or anchoring means in different points along the same.

Figure 4 is a side view of two clamps shut by the anchoring means -one with two screws and the other with one screw- fixing a tubing to a wall or another anchoring structure. In this figure the clamp is of the closed type, because, at each of it ends it conforms an anchoring base.

Figure 5 is a view of the example of the embodiment of Figure 4, which gives an accurate idea of the way in which the new closed clamp fixes the tubing tightly, anchored by means of said clamp to a wall.

Figure 6 is a wire clamp, fixed to a tubing, in accordance with a new embodiment (open clamp) that defines one anchoring end, while the other remains as a forced inlet or outlet of the tubing with no need of unscrewing the anchoring means; and finally,

Figure 7 is a view of the open clamp in accordance with the embodiment of figure 6, where it can be noted how the clamp remains open at an end, so the forced pass of the tubing can be done through said open end taking advantage of the elasticity of the wire it is structured with.

In the different illustrations, the same reference number indicate equal or corresponding parts, and the letters mark the sets of several elements.

### List of main references:

- (a): closed clamp
- (a'): open clamp
- (c): tubing to be applied
- (p): wall (or anchoring structure)
- (t): screw [or anchoring means of (a) or (a') to (p)]
- (1): first end folding or the dual wire
- (2): spacing path between (3) and (3') on the first anchoring base
- (3) and (3'): first anchoring base
- (4) and (4'): second dual folding (intermediate)
- (5) and (5'): initial connection of the arc with the first anchoring base [on the clamps (a) and (a')]
- (6) and (6'): clamping dual arc
- (7) and (7'): final connection of the arc with the second anchoring base [on clamp (a)]
- (8) and (8'): third dual folding (intermediate)
- (9) and (9'): second anchoring base (final spans of the wires)
- (10): spacing path between (9) and (9') on the second anchoring base
- (11): final connection of the arc with the terminal hosting the insertion [in the embodiment of the open clamp (a')]
- (12): terminal hosting the inserting of the tubing [in the embodiment of the open clamp (a')]
- (13) and (13'): ends of the wire that conforms each clamp.

### III - MAIN OBJECT

In order to satisfy the specified objects in clamps (a), for the fixing of tubings (c) and other uses are of the type comprehending a single piece wherein, on one hand, conforms a clamping arc (6) -destined to encircle the tubing (c) being applied- and on the other hand, in at least one its extremes, ends conforming a base for the fixing of the clamp (a) to a wall (p) or similar, characterized by being structures on a wire that, folded on itself at approximately half of its complete length, as from a first folding of the end (1) -resulting of said folding- defines two spans of the same wire, separated from each other by a path (2) and (10) that extends all along the length of the single piece and ends with their extremes (13-13') both directed in a common direction; this dual wire, conforms at least a first anchoring base (3-3'), delimited by the mentioned first extreme folding (1) and a second intermediate and dual folding (4-4') where the clamping arc (6-6') begins, being also dual; while, said clamping arc (6-6') is delimited by a third dual folding (8-8') that ends in the mentioned extremes (13-13') of the wire.

### IV - DESCRIPTION

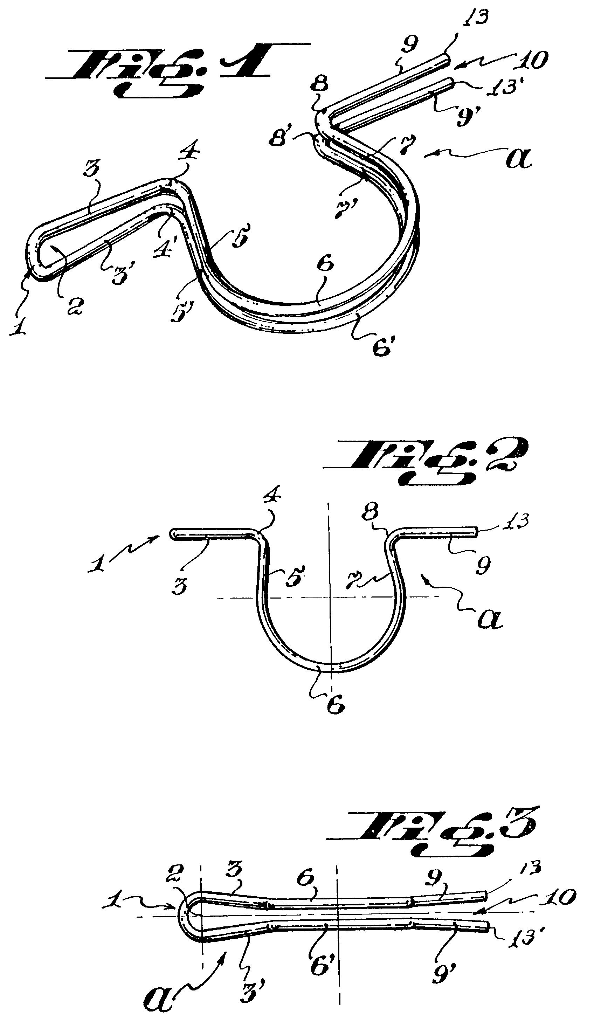

In general terms, the new reference clamp (a) is structured by a single piece of elastic wire (one single wire), but folded in such a way that said resulting structure is dual (Fig. 1).

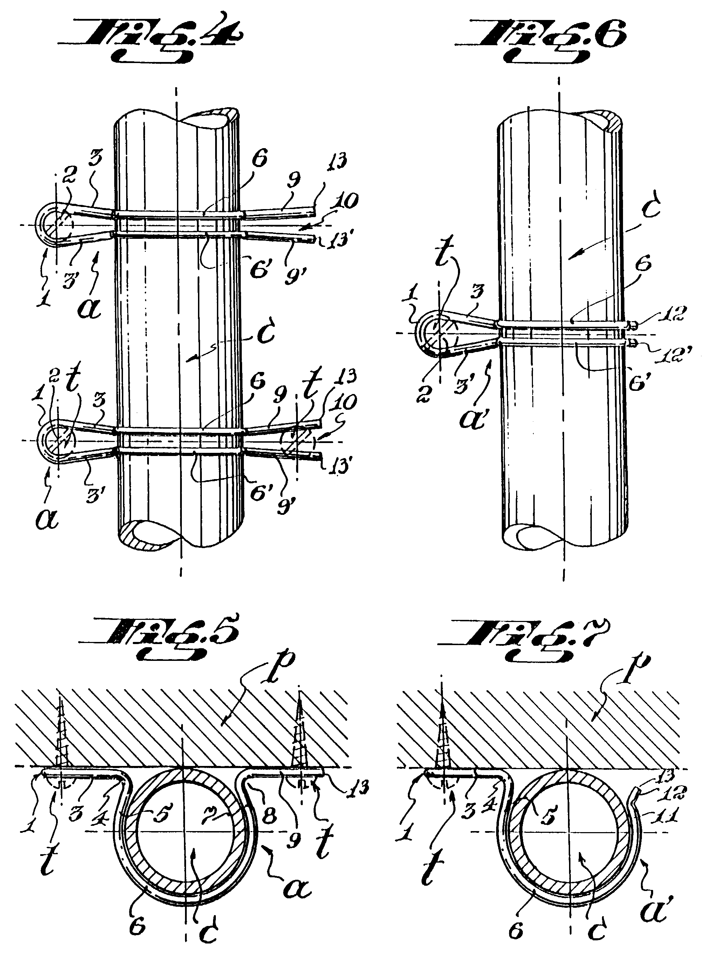

This wire -which may be of different materials with elastic characteristics- is folded on itself at approximately half of its total length as from a first extreme folding (1), defining two equal spans separated by a path (2) extending all along the length of the single piece and leading to (10); being the ends (13) and (13') of the wire, both directed in a common direction (figures 1, 3 and 4). It must be noted that as the wire is formed in two, each result in spans with conformations that repeat in the same way in one and the other, giving place to a dual conformation. Due to this, the individual references that correspond, for this duplication of the forms, shall be given as a pair of references that correspond to equal or equivalent forms.

This dual wire, conforms, at least, a first anchoring base (3-3'), delimited by the mentioned first extreme folding (1) and a second intermediate and dual folding (4-4') in which the clamping arc (6-6') begins, the same being dual too; being this clamping arc (6-6') delimited by a third dual folding (8-8'), ending in the mentioned extremes of the wire (13-13').

The dual arc is conformed by two curved-shaped spans of wire, both equal, (6-6'), which are approximately in the shape of a round arc and extend with the initial connection (5-5') joined without continuity to the second folding (4-4'), and by the final connection (7-7') that at the same time, joins to the third folding (8-8'). This third folding (8-8') extending in straight spans (9-9') each, separated by path (10) and ending at the extremes (13) and (13') of the wire, such as it may be seen in figures 1 to 5 of the drawings illustrating the present invention.

The clamp (a) described hereinbefore is of the "closed" type and conforms two end anchoring bases that, in an approximately the same level, are: one first anchoring base in the shape of a elongated eyelet, delimited by the spans (3) and (3') which, separated by the size of the path (2) they join in the first folding (1) and ends in the second folding (4); and a second one formed by both straight spans (9) and (9'), separated by the path (10) end at extremes (13) and (13').

Thus the clamp has an Ω shape (figure 1, 2 and 5) that, being elastic on its arc (6-6') it fixes perfectly to the diameter of the tubing (c) applied (figures 4 and 5), and its anchoring bases (3-3') and (9-9') allow the introduction of the screws or anchoring means (t) through the paths (2) and (10) respectively, allowing a perfect anchoring to the wall (p); with the particular feature that the holes may be done at any point along the tracks formed by such paths (2) and (3), respectively (figure 5).

In its "open" form, represented by figures 6 and 7, the clamp (a') keeps all the described features, except that it lacks the second anchoring base, and instead, the final connection (11) of the dual arc (6-6') has a slight bent in the form of an elbow that ends in a short terminal (12) that opens in said area the inlet to the cavity of the mentioned arc (6-6') hosting the insertion of the tubing (c). Thus, if it is necessary, said tubing may be dismounted forcing its pass between (13-13') and the wall (p), with no need of unscrewing the anchoring of (3-3'), and after that, the clamp (a') recovers its original form due to its elasticity, ready to be used again.

Undoubtedly, when this invention is put into practice, modifications can be introduced concerning certain details of construction and form without this implying putting aside the fundamental principles that clearly substance the claim clauses that follow:

Having thus especially described and determined the nature of the present invention, and as it can be put into practice, it is declared to claim, as of exclusive right and ownership:

## Claims

1. IMPROVEMENTS IN CLAMPS FOR THE FIXING OF TUBINGS AND OTHER USES; of the type comprehending a single piece wherein, on one hand, conforms a clamping arc -destined to encircle the tubing being applied- and on the other hand, in at least one of its extremes, ends conforming a base for the fixing of the clamp to a wall or similar, characterized by being structured on a wire that, folded on itself at approximately half of its complete length, as from a first folding of the end - resulting from said folding- defines two spans of the same wire, separated from each other by a path that extends all along the length of the single piece and ends with their extremes, both directed in a common direction; this dual wire, conforms at least a first anchoring base, delimited by the mentioned first extreme folding and a second intermediate and dual folding where the clamping arc begins, being also dual; while said clamping arc is delimited by a third dual folding that ends in the mentioned extremes of the wire.

2. IMPROVEMENTS IN CLAMPS FOR THE FIXING OF TUBINGS AND OTHER USES; according to claim 1, wherein the wire is structured in an elastic material, in such a way that the partial clamping of the tubing is semi-constrictive.

3. IMPROVEMENTS IN CLAMPS FOR THE FIXING OF TUBINGS AND OTHER USES; according to claim 1, wherein the third folding delimiting the arc originates a second anchoring base conformed by two straight spans of the wire which end at the ends of the same.

4. IMPROVEMENTS IN CLAMPS FOR THE FIXING OF TUBINGS AND OTHER USES; according to claim 2, wherein the first and second anchoring base are found in an equally leveled position.

5. IMPROVEMENTS IN CLAMPS FOR THE FIXING OF TUBINGS AND OTHER USES; according to claim 1, wherein, as from the third folding, a terminal is defined, which, in that area, increases the inlet of the clamping arc hosting the insertion.

6. IMPROVEMENTS IN CLAMPS FOR THE FIXING OF TUBINGS AND OTHER USES; according to claim 1, wherein in its longitudinal configuration the clamp has a configuration similar to the letter Ω.

7. IMPROVEMENTS IN CLAMPS FOR THE FIXING OF TUBINGS AND OTHER USES; according to claim 1, wherein the first anchoring base conforms an elongated eyelet.

8. IMPROVEMENTS IN CLAMPS FOR THE FIXING OF TUBINGS AND OTHER USES; according to claim 1, wherein the second anchoring base is conformed by both final spans of the wire separated in between by a path.

9. IMPROVEMENTS IN CLAMPS FOR THE FIXING OF TUBINGS AND OTHER USES; in accordance with all the previous claims and substantially as it has been described and illustrated in the annexed documentation.
